# EUROPÄISCHE PATENTSCHRIFT

(11) **EP 4 443 777 B1**
(45) Veröffentlichungstag und Bekanntmachung des Hinweises auf die Patenterteilung: **27.05.2026**
(21) Anmeldenummer: 23166818.7
(22) Anmeldetag: 05.04.2023
(51) Int. Cl.: H04J 3/06, H02H 1/00

(54) **VERFAHREN ZUM SYNCHRONISIEREN VON INTELLIGENTEN ELEKTRONISCHEN EINHEITEN IN EINEM LOKAL BEGRENZTEN NETZWERK**
METHOD FOR SYNCHRONIZING INTELLIGENT ELECTRONIC ENTITIES IN A LOCAL AREA NETWORK
PROCÉDÉ DE SYNCHRONISATION D'ENTITÉS ÉLECTRONIQUES INTELLIGENTES DANS UN RÉSEAU LOCALE

(43) Veröffentlichungstag der Anmeldung: 09.10.2024
(73) Patentinhaber: Siemens Aktiengesellschaft, 80333 München (DE)
(72) Erfinder: Becker, Karsten, 15366 Neuenhagen (DE); Hurrelmann, Jonas, 13347 Berlin (DE); Kind, Roland, 14482 Potsdam (DE); Koplin, Kai, 14482 Potsdam (DE); Lerzer, Christoph, 90584 Allersberg (DE); Sommer, Dirk, 13053 Berlin (DE); Stollfuß, Marcus, 13467 Berlin (DE)
(74) Vertreter: Siemens Patent Attorneys

(56) Entgegenhaltungen:
- DE-T5- 112018 007 928
- YASUYUKI KOZAKAI ET AL: "Keeping clock accuracy on a master clock failure in substation network", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 25 - 29, XP031780883, ISBN: 978-1-4244-5978-0
- INGRAM DAVID M E ET AL: "Quantitative Assessment of Fault Tolerant Precision Timing for Electricity Substations", IEEE TRANSACTIONS ON INSTRUMENTATION AND MEASUREMENT, IEEE, USA, vol. 62, no. 10, 1 October 2013 (2013-10-01), pages 2694 - 2703, XP011526776, ISSN: 0018-9456, [retrieved on 20130911], DOI: 10.1109/TIM.2013.2263673

## Beschreibung

Zur Synchronisation der Uhrzeiteinstellung von Geräten, die über ein Netzwerk miteinander verbunden sind, wurde ein Netzwerkzeitprotokoll geschaffen, das im Englischen Network Time Protocol genannt und im Folgenden mit NTP abgekürzt wird. Ferner ist das im Englischen Precision Time Protocol genannte Zeitprotokoll eingeführt, das im Folgenden als PTP bezeichnet wird. Das PTP weist im Vergleich zum NTP eine höhere Genauigkeit bei der Zeiterfassung der Geräte auf, die über ein Netz miteinander verbunden sind.

Ein lokal begrenztes Netzwerk ist beispielsweise in Umspannwerken der Elektroenergieversorgung realisiert. Solche Umspannwerke dienen zum Herab- beziehungsweise Heraufsetzen der im Versorgungsnetz herrschenden Netzspannungen mittels eines Transformators, dessen Wirkungsweise bekannt ist. Neben einem Transformator weisen Umspannwerke Schalteinheiten wie Leistungsschalter auf, die nach Erhalt eines Schaltsignals Leiterabgänge des Umspannwerks vom restlichen Versorgungsnetz abtrennen.

Die besagten Schaltsignale werden von Schutz- und Automatisierungsgeräten erzeugt, mit denen die Strom- und Spannungsverläufe in den Leitern des Umspannwerks auf das Vorliegen von Fehlerbedingungen hin überwacht werden. Liegt eine Fehlerbedingung vor, wird ein Schaltsignal erzeugt und an eine oder mehrere ausgewählte Schalteinheiten gesendet, so dass die Schalteinheiten in ihre Unterbrecherstellung überführt werden. In der Unterbrecherstellung sind die Kontakte der ausgewählten Schalteinheiten voneinander getrennt, so dass ein Stromfluss über die Schalteinheiten verhindert ist. Ein mit dem einen Kontakt der besagten Schalteinheit verbundener Leiterstrang ist dann von dem restlichen Versorgungsnetz, der mit dem anderen Kontakt der besagten Schalteinheit verbunden ist, abgetrennt.

Damit die Schutz- und Automatisierungsgeräte den Strom- und Spannungsverlauf in den Leitern des Umspannwerks auf das Vorliegen von Fehlerbedingungen hin überwachen können, müssen diese fortwährend mit zeitabhängigen Strom- und Spannungswerten versorgt werden. Zum Bereitstellen dieser Strom- und Spannungswerte sind Strom- und Spannungswandler vorgesehen, die an einer Messtelle des Umspannwerks Strom und Spannung in den Leitern erfassen und sekundärseitig ein geeichtes Messsignal bereitstellen, das mit einer festgelegten Abtastrate unter Gewinnung von Abtastwerten abgetastet wird. Die Abtastwerte werden anschießend digitalisiert. Ferner wird den Abtastwerten ein Zeitstempel fest zugeordnet. Dies erfolgt mittels so genannter "Merging Units" oder mit Hilfe von anderen intelligenten elektronischen Geräten (IEDs) des Umspannwerks. Um die Messwerte miteinander vergleichen zu können, muss die Zeiterfassung der IEDs, die über einen Prozessbus miteinander verbunden sind, synchronisiert werden. Hierzu dient das besagte PTP.

Das PTP wird also in digitalen Umspannwerken für die elektrische Energieversorgung zur Synchronisierung intelligenter elektronischer Geräte (IEDs) verwendet, beispielsweise im sogenannten IEC 61850 Prozessbus.

Die Vergleichbarkeit der Messwerte, die von unterschiedlichen IEDs stammen, ist von entscheidender Bedeutung. Eine verloren gegangene oder unzureichende zeitliche Synchronisation zwischen diesen Geräten führt zu einer Blockierung der Schutzfunktionen in den Schutz- und Automatisierungsgeräten oder zu einem fehlerhaften Auslösen einer Schalteinheit mit einer unbeabsichtigten Unterbrechung der Stromversorgung im Gefolge.

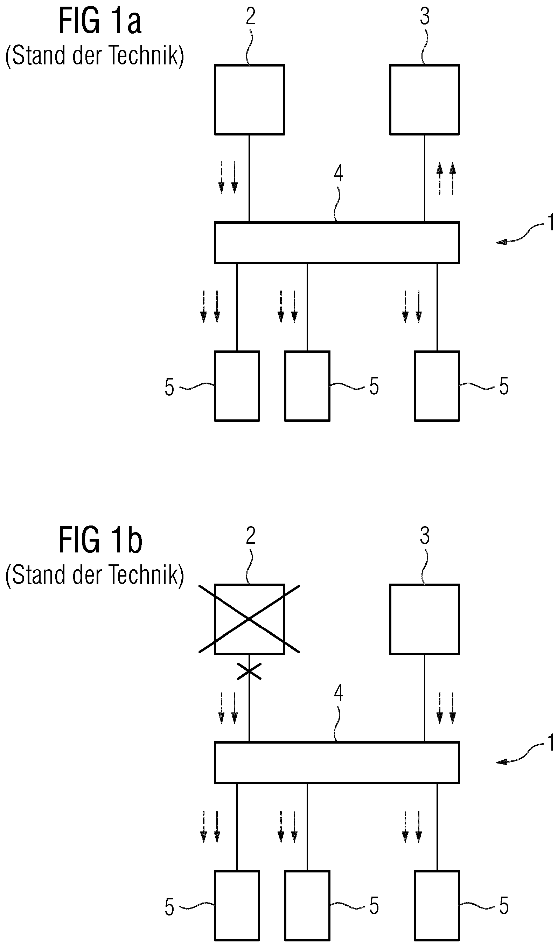

Die Figuren 1a und 1b verdeutlichen den Ablauf der Zeiterfassung gemäß PTP innerhalb eines Prozessbus-Kommunikationsnetzwerks 1, wobei zwei Zeitangabeeinheiten 2 und 3 vorgesehen sind, die PTP-Synchronisationsnachrichten gemäß dem vorgegebenen Aufbau "Announce", "Sync" und "Follow_Up" über einen Ethernet-Switch 4 an IEDs 5 wie beispielsweise Schutzgeräte senden, die ebenfalls an das Prozessbus-Kommunikationsnetzwerk 1 angeschlossen sind. In den Figuren 1a und 1b entspricht ein gestrichelter Pfeil einer PTP-Announce Nachricht, ein durchgezogener Pfeil steht für eine Sync oder Follow-up Nachricht. Die IEDs 5 befinden sich in dem im PTP-Protokoll vorgesehene Slave-Zustand. Sie verhalten sich daher hinsichtlich der Zeitwerterfassung passiv und übernehmen die Zeit, die ihnen von einer Zeitangabeeinheit vorgegeben wird, die sich in der so genannten (Großmeister-) Grandmaster-Rolle befindet.

Die Zeitangabeeinheiten 2, 3 können mit einer primären Referenztaktquelle - der so genannten Primary Reference Clock (PRC) - verbunden sein, z.B. mit dem Global Navigation Satellitensystem (GNSS). Auf Grund ihrer Beeinflussbarkeit durch Störsender (Jamming) oder anderen Mitteln (z.B. Spoofing) stellen solche satellitengestützten globalen Referenztaktquellen jedoch ein Risiko dar und dürfen in Abhängigkeit ihres Einsatzgebietes oft nicht verwendet werden. In einem solchen Fall kann ein geräteinterner Oszillator verwendet werden, der in einem der Zeitangabeeinheiten 2, 3 verbaut ist, wobei diese dann eine relative Zeitreferenz in Gestalt von Zeitwerten im Prozessbus-Kommunikationsnetzwerks 1 unabhängig von außen vorgeben.

Relative Zeitwerte, die von dem Lokaloszillator in den Zeitangabeeinheiten 2, 3 bereitgestellt werden, reichen bei einer Anwendung eines Prozessbus-Kommunikationsnetzwerks 1 in einem Umspannwerk zur Synchronisation aus, da keine absoluten Zeitwerte benötigt werden.

Die Verwendung von zwei Zeitangabeeinheiten dient der Redundanz also Verfügbarkeitszwecken. Unter ausfallfreien Bedingungen wird eine einzige Zeitangabeeinheit 2 mit Hilfe eines so genannten Best-Master-Clock-Algorithmus zum aktiven Grandmaster gewählt. Diese sendet PTP-Synchronisationsnachrichten über den Ethernet-Switch 4. Die andere Zeitangabeeinheit 3 sendet keine PTP-Synchronisationsnachrichten und befindet sich im Slave-Zustand. Sie empfängt PTP-Synchronisierungsnachrichten von der Grandmaster-Zeitangabeeinheit 2 und synchronisiert ihren eigenen internen Oszillator entsprechend dem Oszillator der Zeitangabeeinheit 2, so dass der interne Oszillator der Zeitangabeeinheit 3 nahezu mit der gleichen Geschwindigkeit wie der interne Oszillator der Zeitangabeeinheit 2 oszilliert. Zeitangabeeinheit 3 ist jedoch bereit in eine aktive Rolle überzugehen.

Figur 1b verdeutlicht eine Situation, in der die Zeitangabeeinheit 2 ausgefallen oder vom Netz getrennt ist. Das Fehlen der Zeitangabeeinheit 2 wird auf Grund der ausbleibenden PTP-Announce-Nachrichten seitens der Zeitangabeeinheit 2 von der Zeitangabeeinheit 3 erkannt. Die Zeitangabeeinheit 3 wechselt in die Grandmaster-Rolle.

Die IEDs erkennen den Wechsel des Grandmasters von der Zeitangabeeinheit 2 zur Zeitangabeeinheit 3 aufgrund der PTP-Nachrichten. Dabei wird die Zeitsynchronisation der IEDs nicht gestört, da der interne Oszillator der Zeitangabeeinheit 3 vor der Umschaltung mit dem Oszillator der Zeitangabeeinheit 2 synchronisiert war. Die Synchronisierung der Zeiterfassung unter den IEDs wird reibungslos fortgesetzt. Es gibt keinen Zeitsprung während oder nach der Grandmaster-Umschaltung.

Wenn die Funktionsstörung der Zeitangabeeinheit 2 vorüber ist oder die abgekoppelte Zeitangabeeinheit 2 wieder mit dem Prozessbus-Kommunikationsnetzwerk 1 verbunden ist, entscheidet der BMCA gemäß dem Stand der Technik unmittelbar, dass die Zeitangabeeinheit 2 die Grandmaster-Rolle übernimmt. Als Grandmaster-Zeitangabeeinheit 2 beginnt sie erneut mit dem Senden von PTP-Synchronisationsnachrichten.

Während der Abwesenheit der Zeitangabeeinheit 2 läuft der lokale Oszillator der Zeitangabeeinheit 3 mit seiner eigenen Geschwindigkeit und entfernt sich zeitlich von dem lokalen Oszillator der Zeitangabeeinheit 2. Der Zeit- und Frequenzunterschied zwischen den lokalen Oszillatoren der Zeitangabeeinheit 2 und 3 kann im Zeitpunkt der Übernahme durch die wieder funktionstüchtige oder angeschlossene Zeitangabeeinheit 2 beträchtlich sein. Die IEDs erkennen nach der Übernahme einen Zeitsprung und synchronisieren ihren internen Oszillator erneut mit dem neuen lokalen Oszillator der neuen Grandmaster-Zeitangabeeinheit 2. Dieser Re-Synchronisationsprozess kann bis zu 20 Sekunden betragen.

Die IEDs blockieren ihre Schutzfunktionen während dieser Neusynchronisierung, um eine mögliche Fehlauslösung der Leistungsschalter zur verhindern. Dies stellt einen erheblichen Nachteil dar.

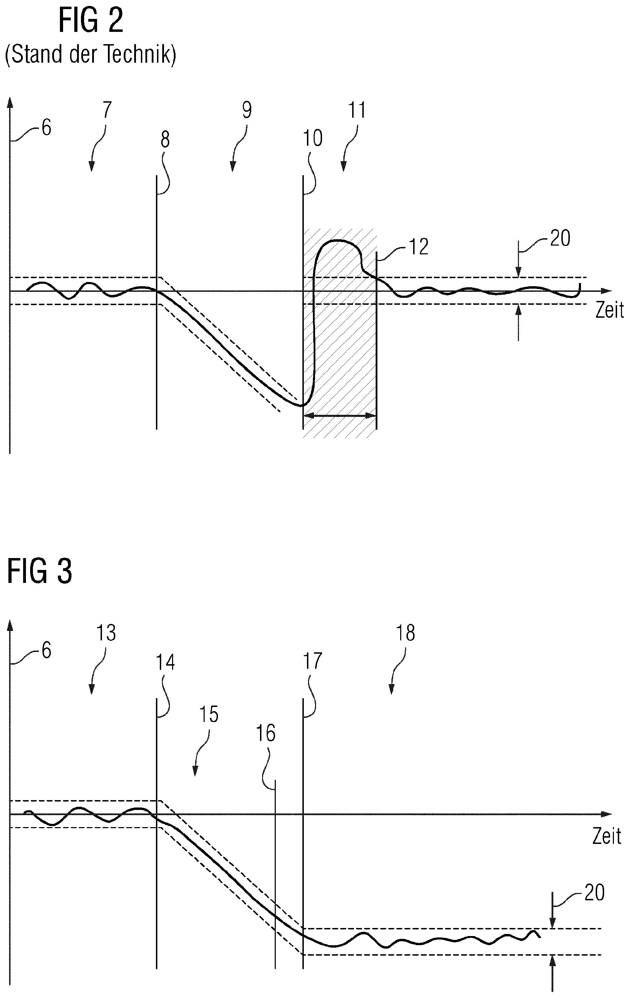

Figur 2 verdeutlicht das oben Beschriebene mit Hilfe eines zweidimensionalen Diagramms, auf dessen Abszisse die Zeit und auf dessen Ordinate 6 der Zeitversatz der Zeitangabeeinheit 3 zur Zeitangabeeinheit 2 gemäß Figur 1 dargestellt ist, jeweils in willkürlichen Einheiten. Der Abstand 20 der gestrichelten Linien voneinander stellt das für die Schutzanwendungen der IEDs erlaubte Maß des Zeitversatzes zwischen den Zeitangabeeinheiten 2 und 3 dar. Die durchgezogene Kurve gibt also den besagten Zeitversatz in Abhängigkeit der Zeit wieder. Liegt die Kurve zwischen den gestrichelten Linien handelt es sich um einen hinnehmbaren Zeitversatz.

In dem mit 7 referenzierten Zeitbereich arbeitet die Zeitangabeeinheit 2 fehlerfrei und ist mit dem Prozessbus-Kommunikationsnetzwerks 1 verbunden. Sie arbeitet in diesem Bereich 7 als Grandmaster-Zeitangabeeinheit 2. Im Zeitpunkt 8 kommt es zur Übernahme der Grandmaster-Rolle durch die Zeitangabeeinheit 3, da PTP-Announce-Nachrichten von der Zeitangabeeinheit 2 ausbleiben und dies seitens der Zeitangabeeinheit 3 erkannt wird. Im Zeitbereich 9 arbeitet die Zeitangabeeinheit 3 dann als Grandmaster-Zeitangabeeinheit 3. Im Zeitpunkt 10 erfolgt das Zurückschalten der Grandmaster-Rolle auf die Zeitangabeeinheit 2. Da die Oszillatoren der Zeitangabeeinheiten 2 und 3 im Zeitbereich 9 nicht mehr synchronisiert waren, haben sich die Zeitwerte der Zeitangabeeinheit 3 von denjenigen der Zeitangabeeinheiten 2 entfernt. Im Zeitbereich 11 ist diese Abweichung größer als erlaubt. Die IEDs erkennen den besagten Zeitsprung und synchronisieren ihren internen Oszillator erneut bis im Zeitpunkt 12 die IEDs mit der wiederkehrenden Grandmaster-Zeitangabeeinheit 2 synchronisiert sind. Dem bisherigen Verfahren haftet der Nachteil an, dass die Schutz-Algorithmen der IEDs im gestrichelten Zeitbereich 11 blockiert sind.

Die folgenden Dokumente bilden relevanten Stand der Technik.

YASUYUKI KOZAKAI ET AL: "Keeping clock accuracy on a master clock failure in substation network", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27. September 2010 (2010-09-27), Seiten 25-29, ISBN: 978-1-4244-5978-0. In dieser Schrift wird vorgeschlagen, das Umschalten des Slaves auf eine neue Grandmaster-Clock für die Dauer einer Wartezeit zu verhindern, wenn der Operator eine neue Grandmaster-Clock installiert. Die Wartezeit hängt von der Dauer der Konvergenz der Regelschleife des Slaves ab.

NGRAM DAVID M E ET AL: "Quantitative Assessment of Fault Tolerant Precision Timing for Electricity Substations", IEEE TRANSACTIONS ON INSTRUMENTATION AND MEASUREMENT, IEEE, USA, Bd. 62, Nr. 10, 1. Oktober 2013 (2013-10-01), Seiten 2694-2703, ISSN: 0018-9456, DOI: 10.1109/ TIM.2013.2263673

DE 11 2018 007928 T5 (MITSUBISHI ELECTRIC CORP [JP]) 27. Mai 2021 (2021-05-27).

Aufgabe der Erfindung ist es, ein Verfahren der eingangs genannten Art anzugeben, bei dem ein Blockieren der Schutz-Algorithmen der IEDs zeitlich reduziert oder sogar vollständig vermieden werden kann.

Diese Aufgabe wird erfindungsgemäß durch die Merkmale des Patentanspruchs 1 gelöst.

Varianten dieser Erfindung sind Gegenstand der abhängigen Patentansprüche.

Im Rahmen der Erfindung wurde erkannt, dass der eben beschriebene Nachteil des Standes der Technik dadurch verursacht wird, dass eine grandmasterfähige PTP-Zeitangabeeinheit die Grandmaster-Rolle übernimmt, sobald sie festgestellt hat, dass sie gemäß dem BMCA (Best Master Clock Algorithm) die beste PTP-Zeitangabeeinheit im Netzwerk ist. Eine grandmasterfähige Zeitangabeeinheit gemäß PTP ist eine Zeitangabeeinheit, die auf Grund des BMCA die Grandmaster-Rolle übernehmen kann und gleichzeitig zur alleinigen Synchronisationsquelle, zum Grandmaster, in einem Netzwerk werden kann. Das von den Erfindern erkannte Problem von nicht gegenseitig synchronisierten lokalen Oszillatoren beim Zurückschalten der Grandmaster-Rolle, wird im BMCA und der PTP-Port-Zustandsmaschine nicht berücksichtigt. Dies führt zu dem beschriebenen Zeitsprung und zur Blockierung der Schutzfunktionen (Schutz-Algorithmen).

Die vorliegende Erfindung schlägt vor, dass eine wiederhergestellte oder wieder angeschlossene grandmasterfähige lokal synchronisierte Zeitangabeeinheit nicht sofort die Grandmaster-Rolle einnimmt, sondern zunächst folgende Schritte durchlaufen werden:
Zunächst wird geprüft, ob es derzeit einen aktiven PTP-Grandmaster der eigenen PTP-Domäne gibt, die durch ihre Domänennummer festgelegt ist. Diese Prüfung wird durch Warten auf Erhalt einer PTP-Announce-Nachricht realisiert. Erhält die grandmasterfähige Zeitangabeeinheit innerhalb eines zuvor festgelegt Zeitrahmens keine PTP-Announce-Nachricht einer anderen Zeitangabeeinheit, wird davon ausgegangen, dass kein aktiver Grandmaster in der Domäne vorhanden ist. Wird kein anderer Grandmaster im Netz erkannt, wird von der Zeitangabeeinheit der BMCA ausgeführt. Sie wechselt in die Grandmaster-Rolle.

Wird jedoch eine Grandmaster-Zeitangabeeinheit im Netzwerk erkannt, wechselt die Zeitangabeeinheit in ihren Slave-Zustand und beginnt, ihren eigenen internen Oszillator mit dem des aktuellen Grandmasters zu synchronisieren.

Nachdem die Zeitangabeeinheit ihren eigenen internen Oszillator mit der erforderlichen Genauigkeit mit dem Grandmaster synchronisiert hat, wird das Erzwingen ihres Slave-Zustandes aufgehoben. Der BMCA wird ausgeführt, und je nach Ergebnis dieser Prüfung wird die besagte Zeitangabeeinheit in die Grandmaster-Rolle wechseln oder im Slave-Zustand verbleiben.

Der entscheidende Punkt ist also, dass die wiederhergestellte oder wieder angeschlossene grandmasterfähige Zeitangabeeinheit ihren eigenen internen Oszillator zunächst mit demjenigen der aktuellen PTP-Grandmaster-Zeitangabeeinheit, sofern diese vorhanden ist, synchronisiert, bevor dieser die Grandmaster-Rolle übernimmt. Auf diese Weise ist ein Zeitsprung vermieden.

Unter einem lokal begrenzten Netzwerk, das im Englischen als "local area network" und kurz als "LAN" bezeichnet ist, ist im Sinne der Erfindung ein räumlich begrenztes Netzwerk zu verstehen. Das lokal begrenzte Netzwerk ist beispielsweise ein Netzwerk, das in der IEC Norm IEC 61850 definiert ist. Vorteilhafterweise weist das lokal begrenzte Netzwerk eine strukturierte Verkabelung auf. Gemäß einer bevorzugten Variante ist das Netzwerk ein Prozessbus-Kommunikationsnetzwerk. Das räumlich begrenzte Netzwerk umfasst intelligente elektrische Geräte (IEDs), die zum Beispiel über kabelgeführte Kommunikationsleitungen oder Funk, z.B**.** 5G-Funknetze, miteinander verbunden sind. Der Einsatz der Ethernet Technologie ist im Rahmen der Erfindung jedoch bevorzugt. Grundsätzlich sind aber auch andere lokal begrenzte Netzwerke im Rahmen der Erfindung möglich.

Unter der Abkürzung IED ist im Rahmen der Erfindung ein intelligentes elektronisches Gerät zu Verstehen. Das IED ist beispielsweise ein Schutz- oder Automatisierungsgerät, ein Relais oder ein Feldleitgerät, das beispielsweise im Bereich der Schutz- und Leittechnik in Umspannwerken verwendet wird. Oft wird ein IED auch als Prozessor-basierte Controller bezeichnet.

Vorteilhafterweise wird im Rahmen der Erfindung das PTP verwendet, wobei das Erzwingen des Slave-Zustandes durch Einstellung der Priorität der besagten Zeitangabeeinheit erfolgt. Wird die Priorität einer grandmasterfähigen Zeitangabeeinheit auf beispielsweise 254 oder 255 eingestellt, so wird sie bei einer Überprüfung durch den BMCA in ihrem Slave-Zustand verbleiben.

Vorteilhafterweise wird die Prüfung, welche Zeitangabeeinheit sich besser für die aktive Grandmaster-Rolle eignet, gemäß dem Best Maser Clock Algorithmus des Protokolls IEE 1588 durchgeführt.

Weitere Vorteile ergeben sich, wenn jede Zeiteingabeeinheit einen eigenen Oszillator aufweist. Ein solcher Oszillator verfügt beispielsweise über einen Quarzkristall, dessen Schwingungen in ein Zeitnormal umgewandelt werden. Oszillatoren sind dem Fachmann jedoch bekannt, so dass an dieser Stelle nicht weiter auf deren genaue Funktionsweise eingegangen zu werden braucht. Der in einer Zeitangabeeinheit verwendete Oszillator kann im Rahmen der Erfindung jedoch mit einem anderen Oszillator synchronisiert werden.

Gemäß einer weiteren zweckmäßigen Variante ist das lokal begrenzte Netzwerk ein Funknetz. Insbesondere entstehen Vorteile, wenn das Funknetz ein 5G-Funknetz ist.

Gemäß einer bevorzugten Ausgestaltung der Erfindung ist das lokal begrenzte Netzwerk ein Prozessbus-Kommunikationsnetzwerk eines Umspannwerkes. Im Prozessbus-Kommunikationsnetzwerk wird bevorzugt die Ethernet-Technologie eingesetzt.

Im Rahmen der Erfindung ist die Anzahl der Zeitangabeeinheiten nicht auf zwei Zeitangabeeinheiten begrenzt. So können in dem Netzwerk auch beispielsweise fünf oder mehr Zeitangabeeinheiten miteinander kommunizieren.

Zweckmäßigerweise ist wenigstens eine Zeitangabeeinheit in einem IED integriert oder mit anderen Worten verbaut. Sie ist also Bestandteil des IEDs und in dessen Gehäuse angeordnet.

Weitere Vorteile ergeben sich, wenn wenigstens ein IED ein Schutz- oder Automatisierungsgerät eines Elektroenergieversorgungsnetzes ist.

Eine weitere Variante des erfindungsgemäßen Verfahrens besteht darin, dass die wieder verfügbare oder wieder mit dem Netzwerk verbundene grandmasterfähige Zeitangabeeinheit, nachdem sie sich mit dem aktuellen Grandmaster synchronisiert hat, nicht unmittelbar wieder die Grandmaster-Rolle übernimmt. Stattdessen verbleibt sie im Slave-Zustand und synchronisiert sich fortlaufend weiter mit der aktuellen Grandmaster-Zeitangabeeinheit. Erst wenn die Abwesenheit einer Grandmaster-Zeitangabeeinheit erkannt wird, wechselt die besagte Zeitangabeeinheit aufgrund des BMCA in Grandmaster-Rolle. Auf diese Weise wird die Anzahl der Grandmaster-Umschaltungen im Netzwerk reduziert. Die ist hinsichtlich der Stabilität der PTP-Synchronisation vorteilhaft.

Die vorliegende Erfindung betrifft ferner eine Zeitangabeeinheit für ein lokal begrenztes Netzwerk, über das intelligente elektronische Einheiten (IEDs) miteinander verbunden sind. Erfindungsgemäß ist wenigstens diese Zeitangabeeinheit zur Durchführung eines der oben erwähnten Verfahren eingerichtet.

Unter einer Zeitangabeeinheit ist im Sinne der Erfindung jede Einheit zu verstehen, die in der Lage ist, ein Zeitnormal zu erzeugen. Diese Einheit kann als ein separates Gerät vorliegen oder aber eine Komponente oder Bestandteil eines anderen Gerätes beispielsweise eine Schutz- oder Automatisierungsgerätes sein.

Die Erfindung wird nachfolgend anhand von Ausführungsbeispielen näher erläutert, wobei gleiche Bezugszeichen auf gleich wirkende Bauteile verweisen und wobei
- Figur 1a: ein Ausführungsbeispiel eines Prozessbus-Kommunikationsnetzwerks mit zwei funktionstüchtigen Zeitangabeeinheiten,
- Figur 1b: ein Ausführungsbeispiel eines Prozessbus-Kommunikationsnetzwerks mit einer ausgefallenen oder vom Netz getrennten Zeitangabeeinheit,
- Figur 2: ein zweidimensionales Diagramm zur Verdeutlichung eines Verfahrens zur Übernahme der Grandmaster-Rolle gemäß dem Stand der Technik,
- Figur 3: ein zweidimensionales Diagramm zur Verdeutlichung eines Verfahrens zur erfindungsgemäßen Übernahme der Grandmaster-Rolle und
- Figur 4: ein Ausführungsbeispiel des erfindungsgemäßen Verfahrens anhand eines Flussdiagramms schematisch verdeutlichen.

Auf die Figuren 1a, 1b und Figur 2 wurde bereits im Zusammenhang mit der Würdigung des Standes der Technik eingegangen.

Figur 3 verdeutlicht ein Ausführungsbeispiel des erfindungsgemäßen Verfahrens. Sie zeigt schematisch den Verlauf der in einem lokalen Netzwerk gemäß Figur 1 vorgegebenen Zeitangabe, auf die sich die IEDs des Netzwerks 1 synchronisieren, anhand eines zweidimensionalen Diagramms, auf dessen Abszisse die Zeit und auf dessen Ordinate 6 der Zeitversatz der Zeitangabeeinheit 3 zur Zeitangabeeinheit 2 gemäß Figur 1 dargestellt ist, jeweils in willkürlichen Einheiten.

Der Abstand 20 der gestrichelten Linien voneinander stellt wieder das durch die Schutzanwendungen der IEDs erlaubte Maß des Zeitversatzes zwischen den Zeitangabeeinheiten 2 und 3 dar. Die durchgezogene Kurve gibt also den Verlauf des Zeitversatzes zwischen den Zeitangabeeinheiten in Abhängigkeit der Zeit wieder. Liegt die Kurve zwischen den gestrichelten Linien handelt es sich um einen hinnehmbaren Zeitversatz.

In dem mit 13 referenzierten Zeitbereich arbeitet die Zeitangabeeinheit 2 fehlerfrei und ist mit dem Prozessbus-Kommunikationsnetzwerk 1 verbunden. Sie arbeitet in diesem Bereich 13 als Grandmaster-Zeitangabeeinheit 2. Im Zeitpunkt 14 kommt es zur Übernahme der Grandmaster-Rolle durch die Zeitangabeeinheit 3**.** Im Zeitbereich 15 arbeitet die Zeitangabeeinheit 3 dann als Grandmaster-Zeitangabeeinheit 3. Im Zeitpunkt 16 hat die Zeitangabeeinheit 2 ihre volle Funktionstüchtigkeit wieder erlangt. Bei einem anderen Ausführungsbeispiel wurde sie vom Netz getrennt und hat sich im Zeitpunkt 16 wieder mit dem Netz 1 verbunden.

Im Gegensatz zum Stand der Technik übernimmt sie nicht wieder sofort die Grandmaster-Rolle, sondern synchronisiert sich oder mit anderen Worten ihren Oszillator mit dem der Grandmaster-Zeitangabeeinheit 3. Im Zeitpunkt 17 ist diese Synchronisation erreicht. Mit Hilfe des BMCA wird festgestellt, dass die Zeitangabeeinheit 2 besser für die Grandmaster-Rolle geeignet ist. Es kommt zum Umschalten der Grandmaster-Rolle im Zeitpunkt 17. Im Zeitbereich 18 füllt die Zeitangabeeinheit 2 wieder die Grandmaster-Rolle aus.

Im Rahmen der Erfindung kommt es hinsichtlich des Zeitversatzes der IEDs zu keinem Zeitpunkt zu einem Überschreiten der zugelassenen Grenzen. Ein Blockieren der Schutz-Algorithmen der IEDs ist im Rahmen der Erfindung vermieden.

Um die sofortige Übernahme der Grandmaster-Rolle im Rahmen der Erfindung zu vermeiden, also mit anderen Worten den Slave-Zustand der jeweilige Zeitangabeeinheit zu erzwingen, wird im Rahmen dieses Ausführungsbeispiels der Erfindung, das auf PTP basiert, mit so genannten Prioritäten gearbeitet. Es sei jedoch darauf hingewiesen, dass das Erzwingen des Slave-Zustandes auch mit anderen Mitteln durchgeführt werden kann, ohne dabei den Rahmen der Erfindung zu verlassen.

Prioritäten sind in der Norm IEEE 1588 definierte Parameter, die durch den BMCA ausgewertet werden. Demgemäß können jeder Zeitangabeeinheit 2 grundsätzlich die Priorität 1 und die Priorität 2 zugeordnet werden. Nach Ausfall der Zeitangabeeinheit 2 wird deren Priorität 1 auf 255 und 254 begrenzt. Der Wert für die Priorität der Zeitangabeeinheit 3 bleibt vollständig vom Benutzer konfigurierbar. Die Priorität 2 bleibt also beim zuvor von dem Nutzer des Netzwerks voreingestellten Wert.

Unter normalen, störungsfreien Bedingungen wird der vom Benutzer konfigurierte Prioritätsparameter verwendet. Im Zeitpunkt 16 wird der Priorität 1-Wert der Zeitangabeeinheit 2 auf den höchstmöglichen Wert 255 eingestellt, dies entspricht der niedrigsten Priorität für die Übernahme der Grandmaster-Rolle. Bei der Ausführung des BMCA verbleibt die Zeitangabeeinheit 2 daher zuverlässig in ihrem Slave-Zustand.

Im Zeitpunkt 17 ist der interne Oszillator der Zeitangabeeinheit 2 mit der erforderlichen Genauigkeit auf den aktuellen PTP-Grandmaster, nämlich auf den Oszillator der Zeitangabeeinheit 3 synchronisiert. Im Zeitpunkt 17 wird der Priorität 1-Wert der Zeitangabeeinheit 2 auf seinen vorher vom Nutzer eingestellten Wert zurückgesetzt. Das Erzwingen des Slave-Zustandes ist daher aufgehoben. Die Zeitangabeeinheit 2 übernimmt durch Ausführung des BMCA wieder die Grandmaster-Rolle.

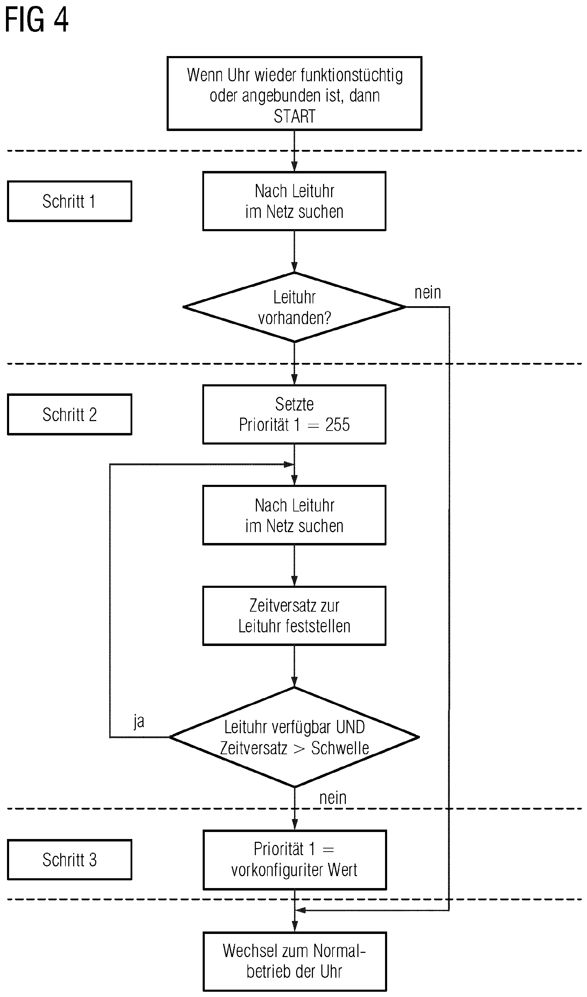

Figur 4 verdeutlicht das erfindungsgemäße Verfahren durch ein Ablaufdiagramm. Aus Platzgründen wird in der Figur 4 anstelle einer Zeitangabeeinheit in der Grandmaster-Rolle von einer Leituhr gesprochen.

Wird eine Zeitangabeeinheit - es sei beispielsweise die Zeitangabeeinheit 2 - wieder funktionstüchtig oder wieder mit dem Netzwerk verbunden, so wird in einem ersten Schritt ermittelt, ob es in dem Netzwerk eine Zeitangabeeinheit in der Grandmaster-Rolle, also eine Leituhr, gibt. Ist keine Leituhr vorhanden, geht die Zeitangabeeinheit 2 in ihren Normalbetrieb über. Ein BMCA wird feststellen, dass die Zeitangabeeinheit 2 die Grandmaster-Rolle übernehmen soll. Dies wird dann umgesetzt.

Wird allerdings festgestellt, dass im Netzwerk eine Leituhr vorliegt, dann wird die Priorität 1 der Zeitangabeeinheit 2 auf 255 eingestellt. Dies zwingt die Zeitangabeeinheit 2 in den Slave-Zustand. Anschließend wird in einer Schleife nach der Leituhr gesucht und die Zeitangabeeinheit 2 synchronisiert sich mit der Leituhr, also hier mit der Zeitangabeeinheit 3**.** Diese Schleife wird so lange durchlaufen, wie der Zeitversatz zwischen Leituhr und Zeitangabeeinheit 2 größer als der vorgegebene Grenzwert ist und die Leituhr weiterhin vorhanden ist. Anschließend wird der Priorität 1-Wert wieder auf ihren vorkonfigurierten Wert eingestellt.

## Patentansprüche

1. Verfahren zum Synchronisieren von intelligenten elektronischen Einheiten, IEDs, (5) in einem lokal begrenzten Netzwerk (1), wobei das lokal begrenzte Netzwerk (1) wenigstens zwei Zeitangabeeinheiten (2, 3) aufweist, bei dem
- für eine wieder funktionstüchtige oder wieder mit dem Netzwerk verbundene erste Zeitangabeeinheit (2) geprüft wird, ob es in dem Netzwerk eine weitere Zeitangabeeinheit (3) gibt, die eine aktive Grandmaster-Rolle (1) einnimmt,
- die erste Zeitangabeeinheit (2) in ihren Slave-Zustand gezwungen wird, wenn eine andere Zeitangabeeinheit in der Grandmaster-Rolle in dem lokal begrenzten Netzwerk (1) erkannt wurde, wobei sich die erste Zeiteinheit (2) mit der Zeitangabeeinheit (3) in der Grandmaster-Rolle synchronisiert,
- nach erfolgter Synchronisation das Erzwingen des Slave-Zustandes bei der ersten Zeitangabeeinheit (2) aufgehoben wird,
- die erste Zeitangabeeinheit (2) in die Rolle der Grandmaster-Zeitangabeeinheit wechselt, wenn diese sich besser für die Grandmaster-Rolle eignet, oder in ihrem Slave-Zustand verbleibt, wenn eine andere Zeitangabeeinheit (3) in dem Netzwerk (1) sich besser für die Grandmaster-Rolle eignet.

2. Verfahren nach Anspruch 1,
**dadurch gekennzeichnet, dass**
unter Anwendung des PTP das Erzwingen des Slave-Zustandes durch Einstellen der Priorität der besagten Zeitangabeeinheit (2) erfolgt.

3. Verfahren nach Anspruch 1 oder 2,
**dadurch gekennzeichnet, dass**
die Prüfung, welche Zeitangabeeinheit (2, 3) sich besser für die aktive Grandmaster-Rolle eignet, gemäß dem Best Master Clock Algorithmus des Protokolls IEE 1588 ,Version 2008, durchgeführt wird.

4. Verfahren nach Anspruch 3,
**dadurch gekennzeichnet, dass**
jede Zeiteingabeeinheit (2, 3) im Netzwerk (1) einen Oszillator aufweist.

5. Verfahren nach einem der vorhergehenden Ansprüche,
**dadurch gekennzeichnet, dass**
das lokal begrenzte Netzwerk (1) eine Domäne ist.

6. Verfahren nach einem der vorhergehenden Ansprüche,
**dadurch gekennzeichnet, dass**
das lokal begrenzte Netzwerk ein Prozessbus-Kommunikationsnetzwerk (1) eines Umspannwerkes ist.

7. Verfahren nach einem der vorangehenden Ansprüche,
**dadurch gekennzeichnet, dass**
wenigstens ein IED (5) ein Schutz- oder Automatisierungsgerät ist.

8. Verfahren nach einem der vorangehenden Ansprüche,
**dadurch gekennzeichnet, dass**
wenigstens eine Zeitangabeeinheit in einem IED verbaut ist.

9. Verfahren nach einem der vorhergehenden Ansprüche,
**dadurch gekennzeichnet, dass**
eine wieder verfügbare oder wieder mit dem Netzwerk verbundene grandmasterfähige Zeitangabeeinheit im Slave-Zustand verbleibt und sich fortlaufend mit der aktuellen Grandmaster-Zeitangabeeinheit synchronisiert und erst bei Wegfall der Grandmaster-Zeitangabeeinheit in die Grandmaster-Rolle wechselt.

10. Zeitangabeeinheit (2, 3) für ein lokal begrenztes Netzwerk (1), über das intelligente elektronischen Einheiten IEDs (5) miteinander verbunden sind
**dadurch gekennzeichnet, dass**
diese zur Durchführung eines Verfahrens gemäß einem der vorhergehenden Ansprüche eingerichtet ist.

## Claims

1. Method for synchronizing intelligent electronic units, IEDs, (5) in a locally restricted network (1), wherein the locally restricted network (1) has at least two timing units (2, 3), in which
- for a first timing unit (2) which is functional again or is connected to the network again, a check is carried out in order to determine whether the network contains a further timing unit (3) which assumes an active grandmaster role (1),
- the first timing unit (2) is forced into its slave state if another timing unit in the grandmaster role was detected in the locally restricted network (1), wherein the first time unit (2) synchronizes with the timing unit (3) in the grandmaster role,
- after synchronization, the enforcement of the slave state is cancelled for the first timing unit (2),
- the first timing unit (2) changes to the role of the grandmaster timing unit if it is better suited to the grandmaster role, or remains in its slave state if another timing unit (3) in the network (1) is better suited to the grandmaster role.

2. Method according to Claim 1,
**characterized in that**
the slave state is forced using the PTP by setting the priority of said timing unit (2).

3. Method according to Claim 1 or 2,
**characterized in that**
the check as to which timing unit (2, 3) is better suited to the active grandmaster role is carried out according to the best master clock algorithm of the IEEE 1588 protocol, version 2008.

4. Method according to Claim 3,
**characterized in that**
each timing unit (2, 3) in the network (1) has an oscillator.

5. Method according to one of the preceding claims,
**characterized in that**
the locally restricted network (1) is a domain.

6. Method according to one of the preceding claims,
**characterized in that**
the locally restricted network is a process bus communication network (1) of a substation.

7. Method according to one of the preceding claims,
**characterized in that**
at least one IED (5) is a protection or automation device.

8. Method according to one of the preceding claims,
**characterized in that**
at least one timing unit is installed in an IED.

9. Method according to one of the preceding claims,
**characterized in that**
a timing unit with grandmaster capability that is available again or is connected to the network again remains in the slave state and synchronizes continuously with the current grandmaster timing unit and changes to the grandmaster role only when the grandmaster timing unit is removed.

10. Timing unit (2, 3) for a locally restricted network (1), via which intelligent electronic units IEDs (5) are connected to one another,
**characterized in that**
it is configured to carry out a method according to one of the preceding claims.

## Revendications

1. Procédé de synchronisation d'unités électroniques intelligentes, IEDs, (5) dans un réseau (1) délimité localement, dans lequel le réseau (1) délimité localement a au moins deux unités (2, 3) d'indication de temps, dans lequel,
- pour une première unité (2) d'indication de temps capable de fonctionner à nouveau ou raccordée à nouveau au réseau, on contrôle,
s'il y a dans le réseau une autre unité (3) d'indication de temps, qui prend un rôle (1) actif de grand maître,
- on oblige la première unité (2) d'indication de temps à être dans son état d'esclave, si une autre unité d'indication de temps a été identifiée dans le rôle de grand maître dans le réseau (1) délimité localement, dans lequel la première unité (2) d'indication de temps se synchronise avec l'unité (3) d'indication de temps dans le rôle de grand maître,
- après avoir effectué la synchronisation, on lève l'obligation d'être dans l'état d'esclave auprès de la première unité (2) d'indication de temps,
- la première unité (2) d'indication de temps prend le rôle d'unité d'indication de temps de grand maître, si elle convient mieux pour le rôle de grand maître, ou reste dans son état d'esclave, si une autre unité (3) d'indication de temps dans le réseau (1) convient mieux pour le rôle de grand maître.

2. Procédé suivant la revendication 1,
**caractérisé en ce qu'**
en appliquant le PTP, l'obligation d'être dans l'état d'esclave s'effectue par établissement de la priorité de ladite unité (2) d'indication de temps.

3. Procédé suivant la revendication 1 ou 2,
**caractérisé en ce que**
le contrôle de celle des unités (2, 3) d'indication de temps, qui convient le mieux pour le rôle actif de grand maître, est effectué suivant l'algorithme Best Master Clock du protocole IEE 1588, version 2008.

4. Procédé suivant la revendication 3,
**caractérisé en ce que**
chaque unité (2, 3) d'indication de temps dans le réseau (1) a un oscillateur.

5. Procédé suivant l'une des revendications précédentes,
**caractérisé en ce que**
le réseau (1) délimité localement est un domaine.

6. Procédé suivant l'une des revendications précédentes,
**caractérisé en ce que**
le réseau délimité localement est un réseau (1) de communication de bus de processus d'un poste de transformation.

7. Procédé suivant l'une des revendications précédentes,
**caractérisé en ce qu'**
au moins une IED (5) est un appareil de protection ou d'automatisation.

8. Procédé suivant l'une des revendications précédentes,
**caractérisé en ce qu'**
au moins l'une des unités d'indication de temps est constituée dans une IED.

9. Procédé suivant l'une des revendications précédentes,
**caractérisé en ce qu'**
une unité d'indication de temps disponible à nouveau ou raccordée à nouveau au réseau reste dans l'état d'esclave et se synchronise en continu avec l'unité en cours d'indication de temps de grand maître et ne passe dans le rôle de grand maître, qu'à la suppression de l'unité d'indication de temps de grand maître.

10. Unité (2, 3) d'indication de temps pour un réseau (1) délimité localement, par lequel des unités électroniques intelligentes IEDs (5) sont raccordées entre elles,
**caractérisée en ce que**
celle-ci est agencée pour effectuer un procédé suivant l'une des revendications précédentes.
